# EUROPÄISCHE PATENTANMELDUNG

(11) **EP 1 519 156 A2**
(43) Veröffentlichungstag der Anmeldung: **30.03.2005**
(21) Anmeldenummer: 04022641.7
(22) Anmeldetag: 23.09.2004
(51) Int. Cl.: G01D 5/00, F15B 15/28, F16F 9/32

(54) **Wegmess-System für ein Kolben-Zylinderaggregat**

(30) Priorität: 27.09.2003 DE 10344952
(71) Anmelder: ZF FRIEDRICHSHAFEN AG, 88046 Friedrichshafen (DE)
(72) Erfinder: Hildner, Stefan, 95364 Ludwigschorgast (DE); Thomä, Achim, Dr., 97493 Bergrheinfeld (DE); Kolb, Wolfgang, 97440 Werneck (DE)

(57) **Zusammenfassung**

Wegmess-System für ein Kolben-Zylinderaggregat, umfassend eine Kolbenstange, die axial beweglich innerhalb eines Zylinders geführt ist, wobei die Position der Kolbenstange von einer die Kolbenstangenbewegung ausführende ersten Positionsmesseinrichtung und einer zylinderseitigen zweiten Positionsmesseinrichtung erfasst wird und die beiden Positionsmesseinrichtungen unverdrehbar zueinander gelagert sind, wobei außerhalb und achsparallel der Kolbenstange die erste Positionsmesseinrichtung angeordnet ist, wobei diese Positionsmesseinrichtung zylinderseitig zur zweiten Positionsmesseinrichtung geführt wird.

## Beschreibung

Die Erfindung betrifft ein Wegmess-System für ein Kolben-Zylinderaggregat entsprechend dem Oberbegriff von Patentanspruch 1.

Aus der DE 29 45 895 A1 ist ein Sensor für ein Kolben-Zylinderaggregat bekannt, der innerhalb einer Kolbenstangenführung angeordnet ist, um eine momentane Hublage des Kolben-Zylinderaggregat erfassen zu können. Ein generelles Problem besteht darin, dass sich die Kolbenstange während des Betriebs verdrehen kann. Abhilfe schafft nur eine am gesamten Umfang präparierte Kolbenstange oder ein kreisringförmiger Sensor.

Die DE 94 12 435 U1 beschreibt einen Arbeitszylinder, dessen Kolbenstange einen Magnetstreifen innerhalb der Kolbenstange aufweist. Des weiteren verfügt die Kolbenstange über einen viereckigen, bevorzugt quadratischen Querschnitt in Verbindung mit einer entsprechend quadratischen Kolbenstangenführung. Damit ist zwar eine Verdrehsicherung erreicht, die einen vergleichsweise schmalen Magnetstreifen in Kombination mit einem engen Messfeld des Sensors ermöglicht, doch stellt die Abdichtung einer Vierkantstange im Vergleich zu einer gleichmäßig runden Kolbenstange ein erhebliches Problem dar, insbesondere wenn die Vierkantstange in einem Großserienprodukt verwendet werden soll und entsprechende Standardbauteile und Werkzeuge vorgegeben sind.

Aufgabe der vorliegenden Erfindung ist die Realisierung eines Wegmess-Systems an einem Kolben-Zylinderaggregat, wobei eine runde Kolbenstange verwendet werden können muss und das Wegmess-System in Umfangsrichtung begrenzt ist.

Erfindungsgemäß wird die Aufgabe dadurch gelöst, dass außerhalb und achsparallel der Kolbenstange die erste Positionsmesseinrichtung angeordnet ist, wobei diese Positionsmesseinrichtung zylinderseitig zur zweiten Positionsmesseinrichtung geführt wird.

Der große Vorteil der Erfindung besteht darin, dass einerseits eine runde Kolbenstangenführung, die sich verhältnismäßig einfach abdichten lässt , verwendet werden kann und andererseits ein verdrehgesicherte Wegmess-System vorliegt.

So ist des weiteren vorgesehen, dass die zylinderseitige Positionsmesseinrichtung in einer Halterung angeordnet ist; wobei diese Halterung über Führungsflächen für die erste kolbenstangenseitige Positionsmesseinrichtung verfügt. Die Halterung kann an einem konventionellen Kolben-Zylinderaggregat, z. B. einem Schwingungsdämpfer befestigt werden, ohne dass beim inneren Aufbau Veränderungen vorgenommen werden müssen.

Gemäß einem vorteilhaften Unteranspruch führt die Halterung die erste Positionsmesseinrichtung radial und in Umfangsrichtung. Auf die erste Positionsmesseinrichtung werden je nach Befestigungspunkt am Kolben-Zylinderaggregat nur noch Axialkräfte eingeleitet. Eine Führungsfunktion wird von der ersten Positionsmesseinrichtung nicht übernommen. Die Führungsfunktion liegt einzig bei der Halterung.

In weiterer vorteilhafter Ausgestaltung wird die Kolbenstange von einem Schutzrohr eingehüllt, die die kolbenstangenseitige Positionsmesseinrichtung ansteuert. Es kann das zumindest bei einem Schwingungsdämpfer in der Regel vorhandene Schutzrohr verwendet werden.

Bei einer Variante wird die kolbenstangenseitige Positionsmesseinrichtung von dem Schutzrohr getragen. Dafür kann das Schutzrohr eine Aufnahmenut für die kolbenstangenseitige Positionsmesseinrichtung aufweisen.

Das Wegmess-System kann auch derart ausgeführt sein, dass die kolbenstangenseitige Positionsmesseinrichtung von einer zylinderseitigen Feder gegen das Schutzrohr axial vorgespannt wird. Für eine einwandfreie Funktion kann sich das Schutzrohr zur ersten und zweiten Positionsmesseinrichtung verdrehen, da diese von der Halterung geführt werden.

Alternativ kann das Schutzrohr mit verdrehsichernden Führungsflächen versehen sein, die sich zylinderseitig abstützen. Im Hinblick auf eine möglichst einfache Zylindergeometrie stützt sich das Schutzrohr in Umfangsrichtung an der Halterung für die zylinderseitige Positionsmesseinrichtung ab.

Anhand der folgenden Figurenbeschreibung soll die Erfindung näher erläutert werden.

Es zeigt:
- Fig. 1 und 2: Draufsicht und perspektivischer Ausschnitt eines Kolben-Zylinderaggregates mit einer Positionsmesseinrichtung innerhalb eines Schutzrohres
- Fig. 3 und 4: Draufsicht und perspektivischer Ausschnitt eines Kolben-Zylinderaggregat mit einer vollständig innerhalb einer Halterung geführten Positionsmesseinrichtung.

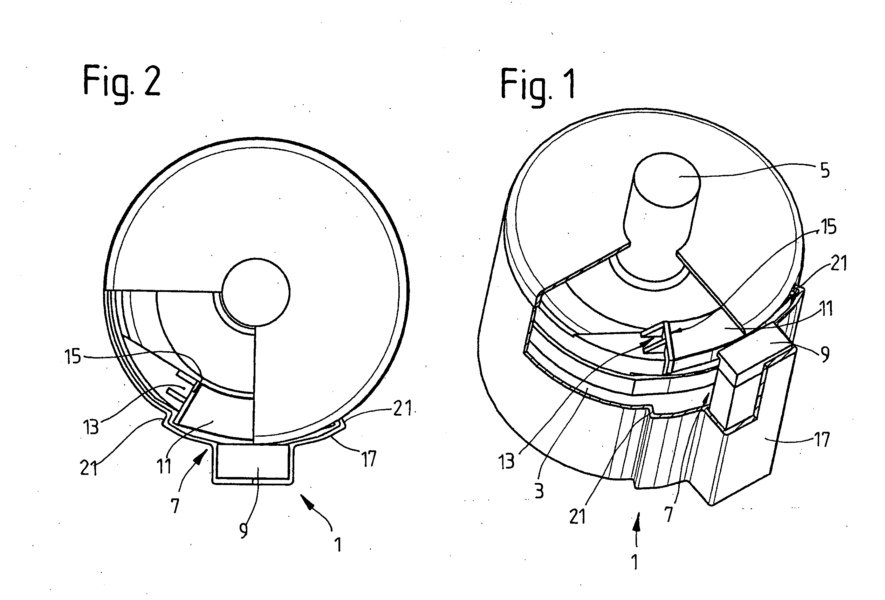

Die Fig. 1 zeigt einen perspektivischen Ausschnitt aus einem Kolben-Zylinderaggregat 1, insbesondere einem Schwingungsdämpfer. Innerhalb eines Zylinders 3 ist eine Kolbenstange 5 axial verschiebbar geführt, wobei die Kolbenstange einen im Rahmen der Fertigungsgenauigkeit kreisförmigen Querschnitt aufweist. Das Kolben-Zylinderaggregat wird z. B. innerhalb eines Fahrwerks eingesetzt, wobei es für die Einstellung des Fahrwerks wichtig ist, den Hubweg der Kolbenstange bezogen auf den Zylinder zu bestimmen. Deshalb kommt ein Wegmess-System 7 zur Anwendung, dass eine erste, die Kolbenstangenbewegung mitausführende Positionsmesseinrichtung 9 in Kombination mit einer zweiten, zylinderseitigen Positionsmesseinrichtung 11 zur Anwendung. Beide Positionsmesseinrichtungen 9; 11 befinden sich außerhalb und achsparallel zur Kolbenstange, wobei sie zueinander geführt sind.

Die zylinderseitige Positionsmesseinrichtung 11 ist innerhalb einer Halterung 13 angeordnet, die beispielsweise mittels einer Klemme an dem Zylinder 3 befestigt ist. Die Halterung verfügt über eine Aufnahme 15 für die zylinderseitige Positionsmesseinrichtung 11. Der konkrete technische Aufbau der Positionsmesseinrichtung ist für die Erfindung eher untergeordnet, da eine Reihe von technischen Ausgestaltungen anwendbar sind.

Die Kolbenstange 3 wird von einem Schutzrohr 17 eingehüllt, die auch die kolbenstangenseitige Positionsmesseinrichtung 9 ansteuert, da das Schutzrohr und die Kolbenstange zumindest mittelbar miteinander verbunden sind. In dieser Variante wird die kolbenstangenseitige Positionsmesseinrichtung von dem Schutzrohr getragen. Dafür verfügt das Schutzrohr über eine Aufnahmenut 19 für die Positionsmesseinrichtung 9. Des weiteren ist das Schutzrohr 17 mit verdrehsichernden Führungsflächen 21 versehen, die sich zylinderseitig abstützen. Ganz konkret stützt sich das Schutzrohr 17 in Umfangsrichtung an Führungsflächen 13f der Halterung 13 ab.

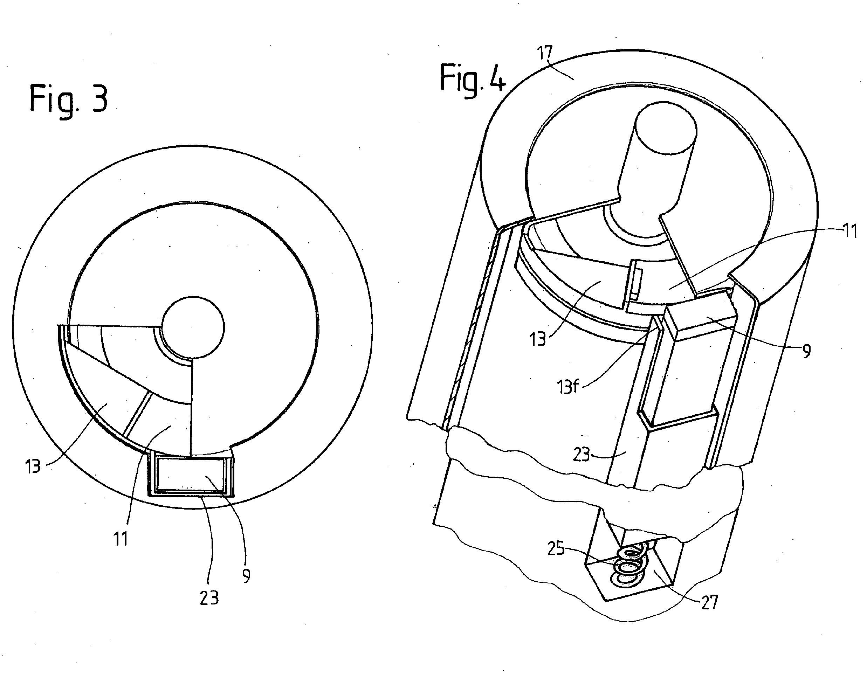

Bei der Alternatiwariante nach den Fig. 3 und 4 wurden im Vergleich zu den Fig. 1 und 2 die Systemgrenzen verändert. Die kolbenstangenseitige Positionsmesseinrichtung 9 wird radial und in Umfangsrichtung ausschließlich von der Halterung 13 geführt. Dafür verfügt die Halterung 13 über eine Aufnahmenut 23, in der die kolbenstangenseitige Positionsmesseinrichtung von dem Schutzrohr 17 durch einfachen stirnseitigen Kontakt verschoben werden kann. Man kann die kolbenstangenseitige Positionsmesseinrichtung mit dem Schutzrohr axial fest verbinden oder eine Feder 25 einsetzen, die sich an der Halterung, z. B. einem Boden 27 der Führungskammer 23 axial abstützt, und die kolbenstangenseitige Positionsmesseinrichtung axial gegen das Schutzrohr 17 vorspannt. Im letzteren Fall kann das Schutzrohr in Umfangsrichtung beliebig zur kolbenstangenseitigen Positionsmesseinrichtung eingebaut werden.

Bei der Montage wird auf die Halterung 13 mit der zweiten Positionsmesseinrichtung 11 auf den Zylinder 3 geklemmt. Parallel dazu kann die erste Positionsmesseinrichtung 9 in die Aufnahmenut 23 des Schutzrohres 17 eingeschoben werden. Anschließend fädelt man das Schutzrohr 17 auf die Kolbenstange. In der Anwendung, z. B. dem schon genannten Fahrwerk ist das Schutzrohr axial zur Kolbenstange fixiert. Aufgrund der Verdrehsicherung zwischen den beiden Positionsmesseinrichtungen 9; 11 innerhalb der Halterung können diese in ihrer räumlichen Ausdehnung auf einen vergleichsweise kleinen Umfangswinkel begrenzt sein, wobei sich einerseits der Bauraumbedarf aber auch die Herstellkosten günstig entwickeln.

## Patentansprüche

1. Wegmess-System für ein Kolben-Zylinderaggregat, umfassend eine Kolbenstange, die axial beweglich innerhalb eines Zylinders geführt ist, wobei die Position der Kolbenstange von einer die Kolbenstangenbewegung ausführende ersten Positionsmesseinrichtung und einer zylinderseitigen zweiten Positionsmesseinrichtung erfasst wird und die beiden Positionsmesseinrichtungen unverdrehbar zueinander gelagert sind,
**dadurch gekennzeichnet,**
**dass** außerhalb und achsparallel der Kolbenstange (5) die erste Positionsmesseinrichtung (9) angeordnet ist, wobei diese Positionsmesseinrichtung (9) zylinderseitig zur zweiten Positionsmesseinrichtung (11) geführt wird.

2. Wegmess-System nach Anspruch 1,
**dadurch gekennzeichnet,**
**dass** die zylinderseitige Positionsmesseinrichtung (11)in einer Halterung(13) angeordnet ist, wobei diese Halterung über Führungsflächen (13f) für die erste kolbenstangenseitige Positionsmesseinrichtung (9) verfügt.

3. Wegmess-System nach Anspruch 2,
**dadurch gekennzeichnet,**
**dass** die Halterung (13) die erste Positionsmesseinrichtung (9) radial und in Umfangsrichtung führt.

4. Wegmess-System nach Anspruch 1,
**dadurch gekennzeichnet,**
**dass** die Kolbenstange (5) von einem Schutzrohr (17) eingehüllt ist, die die kolbenstangenseitige Positionsmesseinrichtung (9) ansteuert.

5. Wegmess-System nach Anspruch 4,
**dadurch gekennzeichnet,**
**dass** die kolbenstangenseitige Positionsmesseinrichtung (9) von dem Schutzrohr (17) getragen wird.

6. Wegmess-System nach Anspruch 4,
**dadurch gekennzeichnet,**
**dass** die kolbenstangenseitige Positionsmesseinrichtung (9) von einer zylinderseitigen Feder (25) gegen das Schutzrohr (17) axial vorgespannt wird.

7. Wegmess-System nach Anspruch 5,
**dadurch gekennzeichnet,**
**dass** das Schutzrohr (17) eine Aufnahmenut (23) für die kolbenstangenseitige Positionsmesseinrichtung (9) aufweist.

8. Wegmess-System nach Anspruch 4,
**dadurch gekennzeichnet,**
**dass** das Schutzrohr 17) mit verdrehsichernden Führungsflächen (21) versehen ist, die sich zylinderseitig abstützen.

9. Wegmess-System nach Anspruch 8,
**dadurch gekennzeichnet,**
**dass** sich das Schutzrohr (17) in Umfangsrichtung an der Halterung (13) für die zylinderseitige Positionsmesseinrichtung abstützt.
